# EUROPEAN PATENT SPECIFICATION

(11) **EP 3 901 334 B1**
(45) Date of publication and mention of the grant of the patent: **16.07.2025**
(21) Application number: 20171094.4
(22) Date of filing: 23.04.2020
(51) Int. Cl.: D01F 1/10, D01F 6/06, D01F 6/46

(54) **ARTICLE COMPRISING CONTINUOUS FILAMENTS BASED ON POLYPROPYLENE POLYCARBONATE BLENDS**
ARTIKEL MIT KONTINUIERLICHEN FILAMENTEN AUF DER BASIS VON POLYPROPYLEN-POLYCARBONAT MISCHUNGEN
ARTICLE COMPRENANT DES FILAMENTS CONTINUS À BASE DE MÉLANGES DE POLYPROPYLÈNE POLYCARBONATE

(43) Date of publication of application: 27.10.2021
(73) Proprietor: Adfil N.V., 9240 Zele (BE)
(72) Inventor: SWENNEN, Ives, 9850 Hansbeke (BE); ASLAN, Özlem, 9000 Gent (BE); Smet, Jeroen, 9250 Waasmunster (BE); VAN DER SCHUEREN, Lien, 9300 Aalst (BE); RUYS, Luc, 9160 Lokeren (BE)
(74) Representative: CPW GmbH

(56) References cited:
- WO-A1-2020/088821
- US-A- 3 318 655

## Description

The invention pertains to articles comprising continuous filaments.

Continuous filaments can be comprised in multifilament yarns and may be used to manufacture ropes, woven fabrics, nonwovens or in straight warp knitted fabrics.

Polypropylene is a polymer which is readily available at a generally acceptable price. However, for certain applications articles comprising continuous filaments made of a polypropylene polymer do not have sufficient mechanical properties, in particular not a sufficiently high tensile strength or not a sufficiently high modulus. There thus remains a need to provide articles comprising polypropylene-based continuous filaments having improved mechanical properties.

The object of the invention is to provide articles comprising continuous polypropylene-based filaments having increased tensile strength and/or increased modulus.

The object is achieved by the article comprising continuous filaments according to claim 1.

An article comprising continuous filaments which comprise 85 wt.% to 98 wt.% of a polypropylene and 2 wt.% to 10 wt.% of a polycarbonate has an increased tensile strength and/or an increased modulus as compared to article comprising continuous filaments consisting of polypropylene. The continuous filaments comprising 85 wt.% to 98 wt.% of a polypropylene and 2 wt.% to 10 wt.% of a polycarbonate have a tensile strength of at least 650 MPa and/or a modulus of at least 10 GPa as determined according to ISO 2062:2009 with a clamping distance of 250 mm and a speed of 250 mm/min, which enables that the continuous filaments and/or multifilament yarns comprising the continuous filaments can be utilized in demanding applications, in particular in ropes, in woven fabrics, in nonwovens, or in straight warp knitted fabrics, which may for example be used as geotextiles or as agrotextiles, as reinforcement fabrics, preferably selected from the group consisting of woven fabrics, knitted fabrics, and laid scrims, or as strapping filaments or strapping tapes.

Continuous filaments comprised in the article which comprises 85 wt.% to 98 wt.% of a polypropylene and 2 wt.% to 10 wt.% of a polycarbonate may have improved creep resistance as compared to continuous filaments consisting of polypropylene as the continuous filaments comprise 85 wt.% to 98 wt.% of a polypropylene and 2 wt.% to 10 wt.% of a polycarbonate can be drawn at a higher draw ratio, preferably at a draw ratio of at least 10, as compared to continuous filaments consisting of polypropylene, thereby providing improved durability to the articles comprising the continuous filaments, the articles preferably being selected from the group consisting of ropes, woven fabrics, nonwovens or straight warp knitted fabrics. The continuous filaments may be drawn at a draw ratio of at least 11, more preferably at a draw ratio of at least 12, even more preferably at a draw ratio of at least 13.

The continuous filaments comprised in the article may have an average creep of 15% or less, preferably 10% or less, wherein creep has been determined by image acquisition as the elongation of the continuous filament after 960 hours of subjecting the continuous filament to a vertical sustained loading corresponding to 50% of the tensile strength of the continuous filament. The average creep value for three continuous filaments is determined.

In an embodiment the continuous filaments comprised in the article are spun from a blend comprising 85 wt.% to 98 wt.% of a polypropylene and 2 wt.% to 10 wt.% of a polycarbonate. Although not being fully understood, it has been found that spinning continuous filaments from a blend comprising 85 wt.% to 98 wt.% of a polypropylene and 2 wt.% to 10 wt.% of a polycarbonate, provides continuous filaments having increased tensile strength as compared to continuous filaments consisting of a polypropylene, i.e. not comprising 2 wt.% to 10 wt.% of a polycarbonate. In addition, the continuous filaments spun from a blend comprising 85 wt.% to 98 wt.% of a polypropylene and 2 wt.% to 10 wt.% of a polycarbonate can be drawn at a higher draw ratio thereby enabling to increase the modulus of the continuous filaments.

In an embodiment, the continuous filaments comprised in the article comprise 88 wt.% to 95 wt.% of the polypropylene to achieve a further increase in tensile strength and/or a further increase in modulus of the continuous filaments.

In an embodiment, the continuous filaments comprised in the article comprise 3 wt.% to 8 wt.% of the polycarbonate, preferably 4 wt.% to 6 wt.% of the polycarbonate, to achieve a higher increase in tensile strength and/or a higher increase in modulus of the continuous filaments.

The continuous filaments comprised in the article preferably have a tensile strength of at least 650 MPa, preferably at least 700 MPa, more preferably at least 750 MPa as determined according to ISO 2062:2009 with a clamping distance of 250 mm and a speed of 250 mm/min.

The continuous filaments comprised in the article preferably have a modulus of at least 10 GPa, more preferably at least 11 GPa, more preferably at least 12 GPa, even more preferably at least 13 GPa, most preferably at least 14 GPa as determined according to ISO 2062:2009 with a clamping distance of 250 mm and a speed of 250 mm/min.

The article, preferably being selected from the group consisting of ropes, woven fabrics, nonwovens and straight warp knitted fabrics, comprising continuous filaments comprising 85 wt.% to 98 wt.% of a polypropylene and 2 wt.% to 10 wt.% of a polycarbonate can for example advantageously be utilized in marine environments, as the polypropylene and the polycarbonate are durable in marine environments.

In an embodiment, the continuous filaments comprised in the article comprise up to 5 wt.% of a compatibilizer, preferably 1 wt.% to 5 wt.% of a compatibilizer. The application of a compatibilizer in the blend from which the continuous filaments are spun, enables to increase the tensile strength of the continuous filaments at equal draw ratio, and enables to increase the modulus of the continuous filaments at higher draw ratios which could not be applied when spinning continuous filaments from a blend without the compatibilizer. Although not being bound to theory, it is believed that the compatibilizer reduces the size of polycarbonate domains in the blend from which the continuous filaments are spun, thereby creating a larger interfacial area between the polypropylene and the polycarbonate in the continuous filaments enabling improved orientation of the polypropylene in the continuous filaments.

The compatibilizer may be a styrene-ethylene-butylene-styrene copolymer.

The compatibilizer may be a maleic acid grafted polymer, preferably a maleic acid grafted polypropylene polymer or a maleic acid grafted styrene-ethylene-butylene-styrene copolymer.

In an embodiment, the continuous filaments comprised in the article may comprise an inorganic additive to, the inorganic additive preferably being selected from the group consisting of calcium carbonate, calcium sulphate, talc and barium sulphate. Preferably, the continuous filaments comprised in the article comprise 1 wt.% to 5 wt.% of the inorganic additive.

The continuous filaments comprised in the article may comprise, preferably 0.2 wt.% to 5 wt.%, of one or more additives, such as UV stabilizers, anti-oxidants and/or flame retardants or pigments/colorants.

The continuous filaments comprised in the article may have any cross-sectional shape, including a circular cross-sectional shape, a triangular cross-sectional shape, a multi-lobal cross-sectional shape, such as for example a trilobal cross-sectional shape, a dog-bone cross-sectional shape, or a rectangular cross-sectional shape, the latter exhibiting a width and a height wherein the width may be considerably larger than the height, i.e. having a width to height ratio of at least 2, preferably at least 5, more preferably at least 10, most preferably at least 25, so that the monofilament in this embodiment are tapes. The continuous filaments comprised in the article may also have an asymmetric cross-sectional shape such that the continuous filaments are configured to form a helical structure.

In an embodiment, the continuous filaments comprised in the article preferably have a circular cross-sectional shape, in particular when the continuous filaments are comprised in a multifilament yarn and/or in a rope.

In an embodiment, the continuous filaments comprised in the article preferably have a rectangular cross-sectional shape, the latter exhibiting a width and a height wherein the width may be considerably larger than the height, i.e. having a width to height ratio of at least 2, preferably at least 5, more preferably at least 10, most preferably at least 25, so that the monofilaments in this embodiment are tapes, in particular when the continuous filaments are comprised in a woven fabric. The tapes comprised in the article may have a thickness between 30 µm and 3000 µm, preferably between 40 µm and 2000 µm, preferably between 45 µm and 1000 µm, preferably between 50 µm and 250 µm, more preferably between 100 µm and 200 µm, as determined by optical microscopy. The width of the tapes comprised in the article may vary, but preferably the tapes have a width of 20 mm or less, more preferably 10 mm or less, even more preferably 8 mm or less, most preferably 6 mm or less. Tapes having a relatively high thickness, e.g. in the range of 250 µm to 3000 µm can advantageously be used as strapping tapes. Tapes having a relatively low thickness, e.g. in the range of 30 µm to 250 µm can advantageously be used in woven fabrics.

The linear density of the continuous filaments comprised in the article is at least 10 dtex, preferably the continuous filaments have a linear density of at least 25 dtex per filament, more preferably at least 30 dtex per filament, even more preferably at least 40 dtex per filament, most preferably at least 50 dtex per filament. When the filaments have a linear density less than 10 dtex per filament, the improvement in tensile strength and/or modulus of the filament has not been observed.

Preferably, the continuous filament has a largest dimension, of 10 mm or less, more preferably 8 mm or less, even more preferably 6 mm or less, the largest dimension being the maximum distance defined by a straight line between two opposing sides of the filament cross-sectional area, the straight line crossing the center of gravity of the cross-sectional area.

The continuous filaments comprised in the article may have an embossed surface to increase the friction between the continuous filaments of the article and a matrix material in a composite material to increase the pull out strength of the continuous filaments in the reinforced composite material. The embossing on the surface of the continuous filaments may have any shape, preferably the embossed surface of the continuous filaments comprises diamond-shaped indentations, preferably in a staggered configuration.

The polypropylene comprised in the continuous filaments comprised in the article may be any polypropylene polymer. Preferably, the polypropylene polymer has a melt flow index of 25 g/10 min or less, preferably 10 g/10 min or less, more preferably 5 g/10 min or less, more preferably 3 g/10 min or less, as determined in accordance with ISO 1133 at 230°C / 2.16 kg, to further increase the tensile strength of the continuous filaments.

The polypropylene comprised in the continuous filaments comprised in the article may be an atactic polypropylene polymer, a syndiotactic polypropylene polymer or an isotactic polypropylene polymer, or any copolymer thereof. Preferably, the polypropylene comprised in the continuous filaments comprised in the article is an isotactic polypropylene polymer to further increase the tensile strength of the continuous filaments and/or of the article comprising the continuous filaments.

Polycarbonate (PC) is a polymer known to those skilled in the art. A polycarbonate polymer is characterized by its carbonate group in the polymer chain, and can for example be obtained by a polymerization reaction of bisphenol A (BPA) and phosgene (COCl₂).

The polycarbonate comprised in the continuous filaments comprised in the article may be any polycarbonate polymer. Preferably, the polycarbonate polymer has a melt flow index of 25 g/10 min or less, preferably 20 g/10 min or less, more preferably 15 g/10 min or less, more preferably 10 g/10 min or less, even more preferably 5 g/10 min or less most preferably 3 g/10 min or less as determined in accordance with ISO 1133 at 300°C / 1.2 kg, to further increase the tensile strength of the continuous filaments.

The article may comprise the continuous filaments in one or more multifilament yarns.

The multifilament yarn(s) comprised in the article may comprise at least 25 continuous filaments, preferably at least 50 continuous filaments, more preferably at least 75, even more preferably at least 100 continuous filaments.

The multifilament yarn(s) comprised in the article preferably comprise continuous filaments according to any of the embodiments of the continuous filaments above for at least 50 wt.% of all filaments in the multifilament yarn, preferably for at least 70 wt.%, more preferably for at least 90 wt.% of all filaments in the multifilament yarn.

In an embodiment, the multifilament yarn(s) comprised in the article consist of continuous filaments according to any of the embodiments of the continuous filaments above.

The multifilament yarn(s) comprised in the article may have any linear density, but preferably the linear density of the multifilament yarns is in the range of 200 to 1500 dtex, preferably in the range of 300 to 1000 dtex, more preferably in the range of 400 to 750 dtex.

The multifilament yarn(s) comprised in the article may be twisted to prevent, or at least to reduce, filaments sticking out of the multifilament yarns thereby improving the handling and processing of the multifilament yarns, and may comprise 10 to 150 twists per meter, preferably 20 to 100 twists per meter, for example 30, 40, 50 or 60 twists per meter, the twists in a multifilament yarn being either a S-twist or a Z-twist.

The article may be a rope comprising at least two multifilament yarns, the multifilament yarns comprising the continuous filaments comprising 85 wt.% to 98 wt.% of a polypropylene and 2 wt.% to 10 wt.% of a polycarbonate, and having a tensile strength of at least 650 MPa and/or a modulus of at least 10 GPa as determined according to ISO 2062:2009. The multifilament yarns comprised in the rope may be twisted together with 10 to 150 twists per meter, preferably 20 to 100 twists per meter, for example 30, 40, 50 or 60 twists per meter. Preferably, the at least two multifilament yarns comprised in the rope are twisted together in the opposite direction to the twists comprised in the multifilament yarns. The rope may comprise more than two multifilament yarns, preferably up to 50, more preferably up to 20, multifilament yarns.

The multifilament yarns comprised in the rope may be braided into a rope.

The rope may have a linear density of at least 500 dtex, preferably of at least 1000 dtex, more preferably of at least 1500 dtex, even more preferably of at least 2000 dtex.

The multifilament yarn(s) comprised in the rope preferably comprise continuous filaments according to any of the embodiments of the continuous filaments above for at least 50 wt.% of all filaments in the multifilament yarns, preferably for at least 70 wt.%, more preferably for at least 90 wt.% of all filaments in the multifilament yarns.

The multifilament yarn(s) comprised in the rope may be tapes, in which case the rope may be considered a twine. The tapes comprised in the twine may be fibrillated tapes.

In an embodiment, the multifilament yarns comprised in the rope consist of continuous filaments according to any of the embodiments of the continuous filaments above.

The article may be a woven fabric comprising the continuous filaments comprising 85 wt.% to 98 wt.% of a polypropylene and 2 wt.% to 10 wt.% of a polycarbonate, and having a tensile strength of at least 650 MPa and/or a modulus of at least 10 GPa as determined according to ISO 2062:2009.

The woven fabric may comprise continuous filaments according to any of the embodiments of the continuous filaments above for at least 50 wt.% of all the filaments, preferably for at least 70 wt.%, more preferably for at least 90 wt.% of all filaments.

In an embodiment, the woven fabric may consist of continuous filaments according to any of the embodiments of the continuous filaments above.

The woven fabric may comprise the continuous filaments according to any of the embodiments of the continuous filaments above as warp threads and/or as weft threads.

The warp threads and/or the weft threads of the woven fabric may comprise the the continuous filaments in multifilament yarns.

The warp threads and/or the weft threads of the woven fabric may comprise the the continuous filaments as tapes.

The warp threads and/or the weft threads of the woven fabric may comprise the the continuous filaments as monofilaments, preferably having linear density of at least 200 dtex per filament, more preferably at least 500 dtex per filament. The monofilaments preferably have a linear density in the range of 200 to 1500 dtex, preferably in the range of 300 to 1000 dtex, more preferably in the range of 400 to 750 dtex.

Preferably, the woven fabric comprises the continuous filaments according to any of the embodiments of the continuous filaments above at least as warp threads. The continuous filaments comprised in the woven fabric enable to provide improved mechanical properties to the woven fabric, in particular increased tensile strength and/or increased modulus of the woven fabric. The continuous filaments comprised in the woven fabric also enable to provide a reduced weight of the woven fabric for a certain required tensile strength and/or modulus, which enables to provide a woven fabric having increased flexibility.

The woven fabric may comprise continuous filaments according to any of the embodiments of the continuous filaments above for at least 50 wt.% of all filaments in the warp threads in the woven fabric, preferably for at least 70 wt.%, more preferably for at least 90 wt.% of all filaments in the warp threads in the woven fabric.

In an embodiment, all warp threads in the woven fabric consist of continuous filaments according to any of the embodiments of the continuous filaments above.

The woven fabric may comprise continuous filaments according to any of the embodiments of the continuous filaments above for at least 50 wt.% of all filaments in the weft threads in the woven fabric, preferably for at least 70 wt.%, more preferably for at least 90 wt.% of all filaments in the weft threads in the woven fabric.

In an embodiment, all weft threads in the woven fabric consist of continuous filaments according to any of the embodiments of the continuous filaments above.

In an embodiment, all warp threads and all weft threads in the woven fabric consist of continuous filaments according to any of the embodiments of the continuous filaments above.

The woven fabrics comprising continuous filaments according to any of the embodiments of the continuous filaments above may be woven in any construction, including a straight warp woven fabric, a leno weave woven fabric, a twill weave woven fabric, a 1/1 woven fabric.

The article may be a nonwoven comprising the continuous filaments comprising 85 wt.% to 98 wt.% of a polypropylene and 2 wt.% to 10 wt.% of a polycarbonate, and having a tensile strength of at least 650 MPa and/or a modulus of at least 10 GPa as determined according to ISO 2062:2009.

The nonwoven may comprise continuous filaments according to any of the embodiments of the continuous filaments above for at least 50 wt.% of all the filaments, preferably for at least 70 wt.%, more preferably for at least 90 wt.% of all filaments.

In an embodiment, the nonwoven may consist of continuous filaments according to any of the embodiments of the continuous filaments above.

The continuous filaments comprised in the nonwoven enable to provide improved mechanical properties to the nonwoven, in particular increased tensile strength and/or increased modulus of the nonwoven. The continuous filaments comprised in the nonwoven also enable to provide a reduced weight of the nonwoven for a certain required tensile strength and/or modulus, which enables to provide a nonwoven having increased flexibility.

The article may be a knitted fabric comprising the continuous filaments comprising 85 wt.% to 98 wt.% of a polypropylene and 2 wt.% to 10 wt.% of a polycarbonate, and having a tensile strength of at least 650 MPa and/or a modulus of at least 10 GPa as determined according to ISO 2062:2009. The knitted fabric preferably is a straight warp knitted fabric which enables to have an increased modulus in the knitted fabric as the continuous filaments comprising 85 wt.% to 98 wt.% of a polypropylene and 2 wt.% to 10 wt.% of a polycarbonate can be load-bearing at very small elongations in a straight warp knitted fabric.

The knitted fabric may comprise continuous filaments according to any of the embodiments of the continuous filaments above for at least 50 wt.% of all the filaments, preferably for at least 70 wt.%, more preferably for at least 90 wt.% of all filaments.

In an embodiment, the knitted fabric may consist of continuous filaments according to any of the embodiments of the continuous filaments above.

The continuous filaments comprised in the knitted fabric enable to provide improved mechanical properties to the knitted fabric, in particular increased tensile strength and/or increased modulus of the knitted fabric. The continuous filaments comprised in the knitted fabric also enable to provide a reduced weight of the knitted fabric for a certain required tensile strength and/or modulus, which enables to provide a knitted fabric having increased flexibility.

The object is further achieved by the process according to claim 13.

A process for manufacturing an article comprising continuous filaments comprising the steps of supplying a blend 85 wt.% to 98 wt.% of a polypropylene, 2 wt.% to 10 wt.% of a polycarbonate, and up to 5 wt.% of a compatibilizer into an extruder, extruding the blend through a spinneret comprising one or more capillaries to form one or more extruded continuous filaments, cooling the extruded continuous filaments, drawing the extruded continuous filaments, preferably at a draw ratio of at least 10, to provide continuous filaments having a tensile strength of at least 650 MPa and/or a modulus of at least 10 GPa as determined according to ISO 2062:2009 enables to provide articles which can be utilized in demanding applications, in particular in ropes, in woven fabrics, in nonwovens, or in straight warp knitted fabrics, which may for example be used as geotextiles or as agrotextiles, as reinforcement fabrics, preferably selected from the group consisting of woven fabrics, knitted fabrics, and laid scrims, or as strapping filaments or strapping tapes.

The process for manufacturing the article comprising continuous filaments preferably provides an article being selected from the group consisting of ropes, woven fabrics, nonwovens or straight warp knitted fabrics.

The process for manufacturing the article comprising continuous filaments may comprise the step of drawing the extruded continuous filaments at a draw ratio of at least 10 to provide continuous filaments with increased tensile strength and/or increased modulus. Preferably, the process for manufacturing the article comprising continuous filaments comprises the step of drawing the extruded continuous filament at a draw ratio of at least 11, more preferably at a draw ratio of at least 12, even more preferably at a draw ratio of at least 13. By extruding a blend comprising 85 wt.% to 98 wt.% of a polypropylene and 2 wt.% to 10 wt.% of a polycarbonate, the extruded continuous filaments can be drawn at a higher draw ratio as compared to a continuous filaments consisting of a polypropylene enabling increased tensile strength and/or increased modulus in the article comprising the continuous filaments.

The process for manufacturing the article comprising continuous filaments may comprise the step of winding the continuous filaments onto a bobbin. When the process for manufacturing the article comprising continuous filaments provides more than one continuous filaments, the process may comprise the step of winding the continuous filaments onto a bobbin as a multifilament yarn.

Preferably, the process for manufacturing the article comprising continuous filaments comprises the step of supplying a blend into an extruder, the blend comprising 88 wt.% to 95 wt.% of the polypropylene to achieve a further increase in tensile strength and/or a further increase in modulus of the continuous filaments comprised in the article.

Preferably, the process for manufacturing the article comprising continuous filaments comprises the step of supplying a blend into an extruder, the blend comprising 3 wt.% to 8 wt.% of the polycarbonate, preferably 4 wt.% to 6 wt.% of the polycarbonate to achieve the highest increase in tensile strength and/or increase in modulus of the continuous filaments comprised in the article.

Surprisingly, the continuous filaments comprised in the article can be obtained by the process wherein the polypropylene and the polycarbonate are supplied into a single screw extruder. Although a single screw extruder is known for not thoroughly mixing two or more polymers, improved continuous filaments are nevertheless obtained.

The process for manufacturing the article comprising continuous filaments may comprise the step of supplying a blend into an extruder, the blend comprising up to 5 wt.% of a compatibilizer, preferably 1 wt.% to 5 wt.% of a compatibilizer, enabling to apply a higher draw ratio to the extruded continuous filaments comprised in the article.

The compatibilizer may be a styrene-ethylene-butylene-styrene copolymer.

The compatibilizer may be a maleic acid grafted polymer, preferably a maleic acid grafted polypropylene polymer or a maleic acid grafted styrene-ethylene-butylene-styrene copolymer.

The process for manufacturing the article comprising continuous filaments may comprise the step of supplying a blend comprising 85 wt.% to 98 wt.% of a polypropylene, 2 wt.% to 10 wt.% of a polycarbonate into an extruder, the blend further comprising an inorganic additive, the inorganic additive preferably being selected from the group consisting of calcium carbonate, calcium sulphate, talc and barium sulphate. Preferably, the article comprises continuous filaments comprising 1 wt.% to 5 wt.% of inorganic additive.

The process for manufacturing the article comprising continuous filaments may comprise the step of supplying a blend into an extruder, the blend comprising 85 wt.% to 98 wt.% of a polypropylene, 2 wt.% to 10 wt.% of a polycarbonate into an extruder, the blend further comprising, preferably 1 wt.% to 5 wt.%, of one or more additives, such as UV stabilizers, anti-oxidants and/or flame retardants.

The process for manufacturing the article comprising continuous filaments comprises the step of drawing the extruded continuous filaments at a draw ratio such that the continuous filaments have a linear density of at least 10 dtex, preferably at least 25 dtex per filament, more preferably at least 30 dtex per filament, even more preferably at least 40 dtex per filament, most preferably at least 50 dtex per filament. When the filaments have a linear density less than 10 dtex per filament, the improvement in tensile strength and/or modulus of the filament has not been observed.

The process for manufacturing the article comprising continuous filaments may comprise the step of extruding the blend through a spinneret comprising one or more capillaries to form one or more extruded continuous filaments, wherein the capillaries have a circular cross-sectional shape, a triangular cross-sectional shape, a multi-lobal cross-sectional shape, such as for example a trilobal cross-sectional shape, or a dog-bone cross-sectional shape, preferably a non-circular cross-sectional shape, more preferably a dog-bone cross-sectional shape. A continuous filament having a non-circular cross-sectional shape can be heated more efficiently thereby enabling to apply a higher draw ratio.

The process for manufacturing the article comprising continuous filaments may comprise the step of embossing the extruded continuous filaments, preferably with diamond-shaped indentations, preferably in a staggered configuration.

Preferably, the process for manufacturing the article comprising continuous filaments comprises the step of supplying a blend comprising 85 wt.% to 98 wt.% of a polypropylene, 2 wt.% to 10 wt.% of a polycarbonate, wherein the polypropylene polymer has a melt flow index of 10 g/10 min or less, preferably 5 g/10 min or less, more preferably 3 g/10 min or less, as determined in accordance with ISO 1133 at 230°C / 2.16 kg, to further increase the tensile strength of the continuous filament. The polypropylene supplied in the process may be an atactic polypropylene polymer, a syndiotactic polypropylene polymer or an isotactic polypropylene polymer. Preferably, the polypropylene supplied in the process is an isotactic polypropylene polymer to further increase the tensile strength of the continuous filament.

### Comparative Example 1

Continuous filaments were spun from a blend of 95.5 wt.% of a polypropylene, 3.5 wt.% of an inorganic filler, and 1 wt.% of nucleating agent.

The continuous filaments were drawn at a draw ratio of 11.9 and had an equivalent diameter of 0.70 mm.

### Example 1

Continuous filaments were spun under the same conditions of Comparative Example 1, except that the continuous filaments were spun from a blend of 93 wt.% of a polypropylene, 5 wt.% of a polycarbonate and 2 wt.% of a compatibilizer.

The continuous filaments were drawn at a draw ratio of 20 and had an equivalent diameter of 0.70 mm.

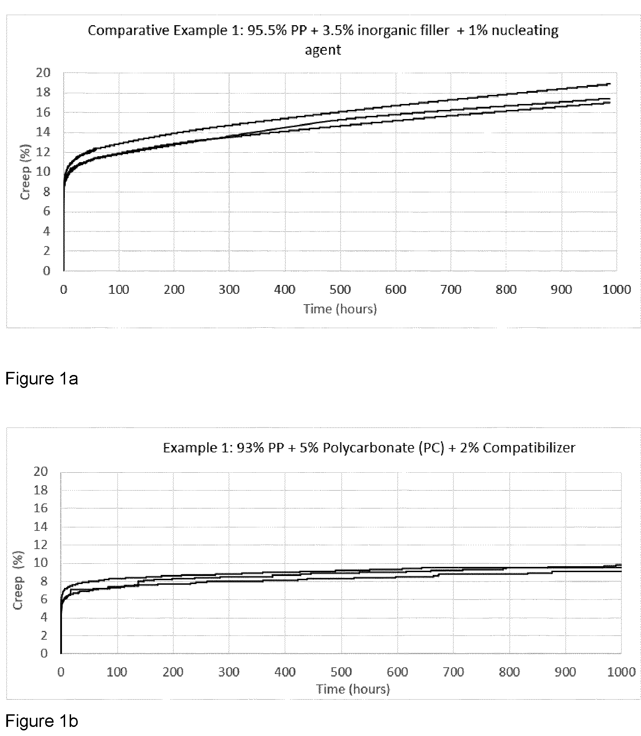

In Table 1 the creep of the continuous filament of example 1 has been compared to the creep of the continuous filaments of comparative example 1. Table 1 and Figure 1a-b show that the creep of continuous filaments according to example 1 is reduced by 47% as compared to the continuous filaments according to comparative example 1.

**Table 1**

| | Average creep at 960 hours (%) | Reduction in creep (%) |
|---|---|---|
| Comparative Example 1 | 17.6 | - |
| Example 1 | 9.4 | 47 |

## Claims

1. An article comprising continuous filaments obtainable by the process of claim 13 wherein the continuous filaments comprise 85 wt.% to 98 wt.% of a polypropylene and 2 wt.% to 10 wt.% of a polycarbonate, wherein the continuous filaments have a linear density of at least 10 dtex per filament, **characterized in that** the filaments have a tensile strength of at least 650 MPa and/or a modulus of at least 10 GPa as determined according to ISO 2062:2009.

2. The article comprising continuous filaments according to claim 1 wherein the continuous filaments comprise 85 wt.% to 98 wt.% of a polypropylene, 2 wt.% to 10 wt.% of a polycarbonate, and up to 5 wt.% of a compatibilizer.

3. The article comprising continuous filaments according to claim 1 or 2 wherein the continuous filaments are spun from a blend comprising 85 wt.% to 98 wt.% of a polypropylene, 2 wt.% to 10 wt.% of a polycarbonate, and up to 5 wt.% of a compatibilizer.

4. The article comprising continuous filaments according to any one of the previous claims wherein the continuous filaments comprise 3 wt.% to 8 wt.% of the polycarbonate, preferably 4 wt.% to 6 wt.% of the polycarbonate.

5. The article comprising continuous filaments according to any one of the previous claims wherein the continuous filaments comprise 1 wt.% to 5 wt.% of the compatibilizer and wherein the compatibilizer preferably is a styrene-ethylene-butylene-styrene copolymer, or a maleic acid grafted polymer, preferably a maleic acid grafted polypropylene polymer or a maleic acid grafted styrene-ethylene-butylene-styrene copolymer.

6. The article comprising continuous filaments according to any one of the previous claims wherein the continuous filaments have a linear density of at least 25 dtex per filament.

7. The article comprising continuous filaments according to any one of the previous claims wherein the continuous filaments are tapes.

8. The article comprising continuous filaments according to any one of the previous claims wherein the continuous filaments have a tensile strength of at least 700 MPa, more preferably at least 750 MPa as determined according to ISO 2062:2009.

9. The article comprising continuous filaments according to any one of the previous claims wherein the continuous filaments have a modulus of at least 11 GPa, more preferably at least 12 GPa, more preferably at least 13 GPa, most preferably at least 14 GPa as determined according to ISO 2062:2009.

10. The article comprising continuous filaments according to any one of claims 1 to 9 wherein the article is a multifilament yarn.

11. The article comprising continuous filaments according to any one of claims 1 to 9 wherein the article is a rope, preferably comprising at least two multifilament yarns according to claim 10.

12. The article comprising continuous filaments according to any one of claims 1 to 9 wherein the article is a woven fabric, preferably comprising at least two multifilament yarns according to claim 10.

13. A process for manufacturing an article comprising continuous filaments comprising the steps of supplying a blend comprising 85 wt.% to 98 wt.% of a polypropylene, 2 wt.% to 10 wt.% of a polycarbonate, and up to 5 wt.% of a compatibilizer into an extruder, extruding the blend through a spinneret comprising one or more capillaries to form one or more extruded filaments, cooling the extruded filaments, drawing the extruded filaments at a draw ratio of at least 10, wherein the continuous filaments have a linear density of at least 10 dtex per filament, wherein the filament has a tensile strength of at least 650 MPa and a modulus of at least 10 GPa as determined according to ISO 2062:2009.

14. The process for manufacturing an article comprising continuous filaments according to claim 13 wherein the blend comprises 3 wt.% to 8 wt.% of the polycarbonate, preferably 4 wt.% to 6 wt.% of the polycarbonate.

15. The process for manufacturing an article comprising continuous filaments according to any one of claims 13 to 14 wherein the blend is supplied into a single screw extruder.

## Patentansprüche

1. Artikel, der kontinuierliche Filamente umfasst und durch das Verfahren nach Anspruch 13 erhältlich ist, wobei die kontinuierlichen Filamente 85 Gew.-% bis 98 Gew.-% eines Polypropylens und 2 Gew.-% bis 10 Gew.-% eines Polycarbonats umfassen, wobei die kontinuierlichen Filamente eine lineare Dichte von mindestens 10 dtex pro Filament aufweisen, **dadurch gekennzeichnet, dass** die Filamente eine Zugfestigkeit von mindestens 650 MPa und/oder einen Modul von mindestens 10 GPa, bestimmt nach ISO 2062:2009, aufweisen.

2. Artikel umfassend kontinuierliche Filamente nach Anspruch 1, wobei die kontinuierlichen Filamente 85 bis 98 Gew.-% eines Polypropylens, 2 bis 10 Gew.-% eines Polycarbonats und bis zu 5 Gew.-% eines Kompatibilisierungsmittels umfassen.

3. Artikel umfassend kontinuierliche Filamente nach Anspruch 1 oder 2, wobei die kontinuierlichen Filamente aus einer Mischung gesponnen werden, die 85 bis 98 Gew.-% eines Polypropylens, 2 bis 10 Gew.-% eines Polycarbonats und bis zu 5 Gew.-% eines Kompatibilisierungsmittels umfasst.

4. Artikel umfassend kontinuierliche Filamente nach einem der vorstehenden Ansprüche, wobei die kontinuierlichen Filamente 3 Gew.-% bis 8 Gew.-% des Polycarbonats, bevorzugt 4 Gew.-% bis 6 Gew.-% des Polycarbonats, umfassen.

5. Artikel umfassend kontinuierliche Filamente nach einem der vorstehenden Ansprüche, wobei die kontinuierlichen Filamente 1 Gew.-% bis 5 Gew.-% des Kompatibilisierungsmittels umfassen, und wobei das Kompatibilisierungsmittel bevorzugt ein Styrol-Ethylen-Butylen-Styrol-Copolymer oder ein Maleinsäure-gepfropftes Polymer, bevorzugt ein Maleinsäure-gepfropftes Polypropylen-Polymer oder ein Maleinsäure-gepfropftes Styrol-Ethylen-Butylen-Styrol-Copolymer ist.

6. Artikel umfassend kontinuierliche Filamente nach einem der vorstehenden Ansprüche, wobei die kontinuierlichen Filamente eine lineare Dichte von mindestens 25 dtex pro Filament aufweisen.

7. Artikel umfassend kontinuierliche Filamente nach einem der vorstehenden Ansprüche, wobei die kontinuierlichen Filamente Bänder sind.

8. Artikel umfassend kontinuierliche Filamente nach einem der vorstehenden Ansprüche, wobei die kontinuierlichen Filamente eine Zugfestigkeit von mindestens 700 MPa, bevorzugt von mindestens 750 MPa, gemäß ISO 2062:2009 aufweisen.

9. Artikel umfassend kontinuierliche Filamente nach einem der vorstehenden Ansprüche, wobei die kontinuierlichen Filamente einen Modul von mindestens 11 GPa, bevorzugt von mindestens 12 GPa, noch bevorzugter von mindestens 13 GPa, besonders von mindestens 14 GPa, bestimmt nach ISO 2062:2009, aufweisen.

10. Artikel umfassend kontinuierliche Filamente nach einem der Ansprüche 1 bis 9, wobei der Artikel ein Multifilamentgarn ist.

11. Artikel umfassend kontinuierliche Filamente nach einem der Ansprüche 1 bis 9, wobei der Artikel ein Seil ist, das bevorzugt mindestens zwei Multifilamentgarne nach Anspruch 10 umfasst.

12. Artikel umfassend kontinuierliche Filamente nach einem der Ansprüche 1 bis 9, wobei der Artikel ein Gewebe ist, das bevorzugt mindestens zwei Multifilamentgarne nach Anspruch 10 umfasst.

13. Verfahren zur Herstellung eines Artikels, der kontinuierliche Filamente umfasst, umfassend die Schritte des Zuführens einer Mischung, die 85 Gew.-% bis 98 Gew.-% eines Polypropylens, 2 Gew.-% bis 10 Gew.-% eines Polycarbonats und bis zu 5 Gew.-% eines Kompatibilisierungsmittels umfasst, in einen Extruder, Extrudieren der Mischung durch eine Spinndüse, die eine oder mehrere Kapillaren umfasst, um ein oder mehrere extrudierte Filamente zu bilden, Abkühlen der extrudierten Filamente, Verstrecken der extrudierten Filamente mit einem Streckverhältnis von mindestens 10, wobei die kontinuierlichen Filamente eine lineare Dichte von mindestens 10 dtex pro Filament aufweisen, wobei das Filament eine Zugfestigkeit von mindestens 650 MPa und einen Modul von mindestens 10 GPa, bestimmt nach ISO 2062:2009, aufweist.

14. Verfahren zur Herstellung eines Artikels, der kontinuierliche Filamente umfasst, nach Anspruch 13, wobei die Mischung 3 bis 8 Gew.-% des Polycarbonats, bevorzugt 4 bis 6 Gew.-% des Polycarbonats umfasst.

15. Verfahren zur Herstellung eines Artikels, der kontinuierliche Filamente umfasst, nach einem der Ansprüche 13 bis 14, wobei die Mischung in einen Einschneckenextruder zugeführt wird.

## Revendications

1. Article comprenant des filaments continus aptes à être obtenus par le procédé de la revendication 13, dans lequel les filaments continus comprennent 85 % en poids à 98 % en poids d'un polypropylène et 2 % en poids à 10 % en poids d'un polycarbonate, dans lequel les filaments continus présentent une densité linéaire d'au moins 10 dtex par filament, **caractérisé en ce que** les filaments présentent une résistance à la traction d'au moins 650 MPa et/ou un module d'au moins 10 GPa, tels que déterminés selon la norme ISO 2062:2009.

2. Article comprenant des filaments continus selon la revendication 1 dans lequel les filaments continus comprennent 85 % en poids à 98 % en poids d'un polypropylène, 2 % en poids à 10 % en poids d'un polycarbonate, et jusqu'à 5 % en poids d'un agent de compatibilité.

3. Article comprenant des filaments continus selon la revendication 1 ou la revendication 2 dans lequel les filaments continus sont filés à partir d'un mélange comprenant 85 % en poids à 98 % en poids d'un polypropylène, 2 % en poids à 10 % en poids d'un polycarbonate, et jusqu'à 5 % en poids d'un agent de compatibilité.

4. Article comprenant des filaments continus selon l'une quelconque des revendications précédentes dans lequel les filaments continus comprennent de 3 % en poids à 8 % en poids du polycarbonate, préférablement de 4 % en poids à 6 % en poids du polycarbonate.

5. Article comprenant des filaments continus selon l'une quelconque des revendications précédentes dans lequel les filaments continus comprennent de 1 % en poids à 5 % en poids de l'agent de compatibilité et dans lequel l'agent de compatibilité est préférablement un copolymère styrène-éthylène-butylène-styrène, ou un polymère greffé à l'acide maléique, préférablement un polymère de polypropylène greffé à l'acide maléique ou un copolymère styrène-éthylène-butylène-styrène greffé à l'acide maléique.

6. Article comprenant des filaments continus selon l'une quelconque des revendications précédentes dans lequel les filaments continus présentent une densité linéaire d'au moins 25 dtex par filament.

7. Article comprenant des filaments continus selon l'une quelconque des revendications précédentes dans lequel les filaments continus sont des rubans.

8. Article comprenant des filaments continus selon l'une quelconque des revendications précédentes dans lequel les filaments continus présentent une résistance à la traction d'au moins 700 MPa, plus préférablement d'au moins 750 MPa, telle que déterminée selon la norme ISO 2062:2009.

9. Article comprenant des filaments continus selon l'une quelconque des revendications précédentes dans lequel les filaments continus présentent un module d'au moins 11 GPa, plus préférablement d'au moins 12 GPa, plus préférablement d'au moins 13 GPa, plus préférentiellement d'au moins 14 GPa, tel que déterminé selon la norme ISO 2062:2009.

10. Article comprenant des filaments continus selon l'une quelconque des revendications 1 à 9 dans lequel l'article est un fil multifilament.

11. Article comprenant des filaments continus selon l'une quelconque des revendications 1 à 9 dans lequel l'article est un câble, comprenant préférablement au moins deux fils multifilaments selon la revendication 10.

12. Article comprenant des filaments continus selon l'une quelconque des revendications 1 à 9 dans lequel l'article est un tissu, comprenant préférablement au moins deux fils multifilaments selon la revendication 10.

13. Procédé de fabrication d'un article comprenant des filaments continus, comprenant les étapes consistant à introduire dans une extrudeuse un mélange comprenant 85 % en poids à 98 % en poids d'un polypropylène, 2 % en poids à 10 % en poids d'un polycarbonate, et jusqu'à 5 % en poids d'un agent de compatibilité, extruder le mélange à travers une filière comprenant un ou plusieurs capillaires pour former un ou plusieurs filaments extrudés, refroidir les filaments extrudés, étirer les filaments extrudés à un taux d'étirage d'au moins 10, dans lequel les filaments continus présentent une densité linéaire d'au moins 10 dtex par filament, dans lequel le filament présente une résistance à la traction d'au moins 650 MPa et un module d'au moins 10 GPa, tels que déterminés selon la norme ISO 2062:2009.

14. Procédé de fabrication d'un article comprenant des filaments continus selon la revendication 13 dans lequel le mélange comprend 3 % en poids à 8 % en poids du polycarbonate, préférablement 4 % en poids à 6 % en poids du polycarbonate.

15. Procédé de fabrication d'un article comprenant des filaments continus selon l'une quelconque des revendications 13 à 14 dans lequel le mélange est introduit dans une extrudeuse à vis unique.
